# EUROPEAN PATENT SPECIFICATION

(11) **EP 0 404 298 B1**
(45) Date of publication and mention of the grant of the patent: **01.12.1993**
(21) Application number: 90303364.5
(22) Date of filing: 29.03.1990
(51) Int. Cl.: B23C 5/10

(54) **End mill for finishing the face or side of hard work**
Fingerfräser für die Endbearbeitung harter Werkstücke
Fraise à queue pour le finissage de pièces d'oeuvre dures

(30) Priority: 20.06.1989 JP 157499/89
(43) Date of publication of application: 27.12.1990
(73) Proprietor: HITACHI TOOL KABUSHIKI KAISHA, Tokyo (JP)
(72) Inventor: Kishimoto, Kiyoshi, c/o Hitachi Tool K.K., Yodogawa-ku, Osaka-shi (JP); Yodoshi, Shigeyasu, c/o Hitachi Tool K.K., Yodogawa-ku, Osaka-shi (JP)
(74) Representative: Bowles, Sharon Margaret

(56) References cited:
- EP-A- 0 213 334
- DE-A- 2 937 585
- DE-A- 3 124 104
- DE-A- 3 344 620
- DE-B- 1 058 809

## Description

The present invention relates to an end mill of the general type defined in the precharacterising part of claim 1, for finishing the face(s) or side(s) of hard work, having a plurality of helix cutting edges on its periphery.

### Prior Art

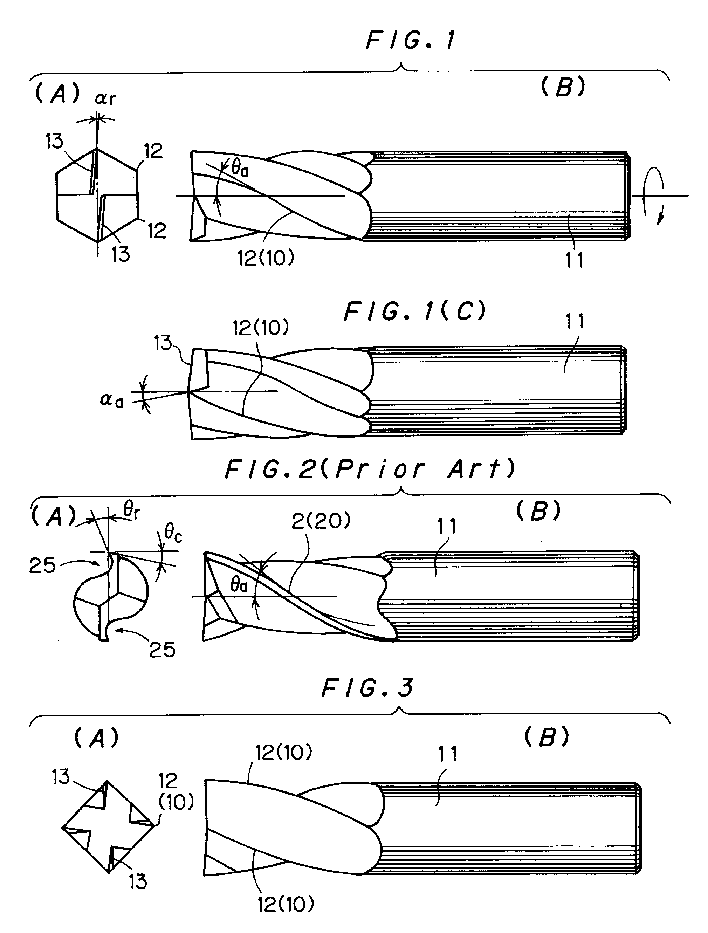

An end mill shown in Fig. 2 has been conventionally used as a rotary cutting tool of a machine tool such as a milling machine to cut general-purpose materials such as steel. Generally, such an end mill has sharp cutting edges 2 disposed on an imaginary cylinder and having a helix angle ϑa and a positive rake angle ϑr. The end mill also has large flutes 25. This configuration facilitates the edges to cut into work and to allow chips to be discharged smoothly, ensuring very high cutting efficiency. The angles of the cutting edges 2 can be properly formed to have an optimum shape depending on the characteristics of the work. When an end mill with sharp cutting edges is used to cut hard work which cannot be cut efficiently, the edges are worn significantly and are apt to be chipped during cutting. To solve these problems, the specifications of the cutting edges 2 have been improved. More specifically, the strength of the cutting edges 2 are increased by decreasing the rake angle ϑr and the relief angle ϑc, and the rigidity of the end mill is also increased by decreasing the depths of the flutes 25, significantly preventing the cutting edges 2 from being worn and chipped.

It is known that an end mill with more cutting edges can have a longer service life, particularly when the end mill is used to cut hard work. Therefore, increasing the number of the cutting edges is also a means for improvement. In addition, the cutting conditions of the end mill, such as the depth of cut, are loosened and the end mill with improved specifications (increased number of cutting edges and other improvements in the performance of the edges) is used, when the end mill cannot efficiently cut the hard work.

To efficiently finish the face or side of the hard work, end mills must be made of materials with sufficient hardness and strength suited for cutting the hard work. High-speed steel and cemented carbide are generally used as the materials of end mills. When cutting the hard work, end mills made of cemented carbide and coated with hard substance such as TiN are used widely. Even in this case, however, such end mills with cutting edges having conventional shapes cannot cut work harder than HRC55.

The demand for finishing the face or side of hard work is increasing in many industrial fields. However, it is almost impossible to cut hard work such as hardened tool steel having a hardness of HRC60, no matter how the specifications such as the rake angle, relief angle and the number of the cutting edges of a conventional end mill are modified, because the modified specification values are not appropriate to practical use. This problem cannot be solved by changing cutting conditions. To cope with this situation, grinding and electrical discharge machining methods have been used.

However, these methods are slow in cutting speed, resulting in low cutting efficiency.

Very hard materials such as ceramics, CBN (Cubic Boron Nitride) and diamond are used as cutting tool materials. Although these materials are extremely hard, they are relatively fragile and liable to be chipped during end mill cutting because cutting is performed intermittently. In addition, they cannot be formed into desired shapes due to low machinability. As a result, they are used only for limited application, such as slight amounts of cutting.

EP 0213334 shows an end mill of the general type illustrated in Figure 2 composed of a NbC-TiC-TiN based cerment composition.

### SUMMARY OF THE INVENTION

It is an object of the present invention to provide an easy-to-produce end mill ideally suited for finishing the face or side of hard work made of such as hardened materials and being capable of solving the above-mentioned problems.

Accordingly the invention provides an end mill for finishing the side or face of hard work comprising a shank and a plurality of helical cutting edges on the periphery of the end mill circumscribed by an imaginery cylinder with the helix direction of the cutting edges about the longitudinal axis of the end mill being in the same direction as the cutting rotational direction of the end mill characterised in that the cross-section of the end mill perpendicular to its longitudinal axis comprises a regular polygon having at least four sides with adjacent sides of the polygon forming symmetrical vertices that constitute the cutting edges.

Preferably the polygon comprises at least eight sides and each side is symmetrically concave to reduce the cutting angle to a maximum of 130°.

In addition, at the end surface of the end mill, a plurality of bottom edges are disposed from the vertexes of the polygon to the center of the axis. The number of the bottom edges is set as a divider of the number of the angles of the polygon, that is, the quotient obtained by dividing the number of the angles of the polygon by the number of the bottom edges is an integer. Preferably the bottom cutting edges have a negative rake angle.

In a preferred embodiment the polygon is a regular hexagon having six cutting edges and two bottom cutting edges disposed at the end of the mill, the cutting edge having a right helix angle of 30° and the bottom cutting edge having a rake angle of -20° in the radial direction and -5° in the axial direction.

The end mill made of cemented carbide is further coated with hard substance such as TiN. This hardening of the end mill is combined with the above-mentioned shapes of the cutting edges to make the cutting of the hard work possible.

The present invention is detailed below referring to the accompanying drawings and examples.

### BRIEF DESCRIPTION OF THE DRAWINGS

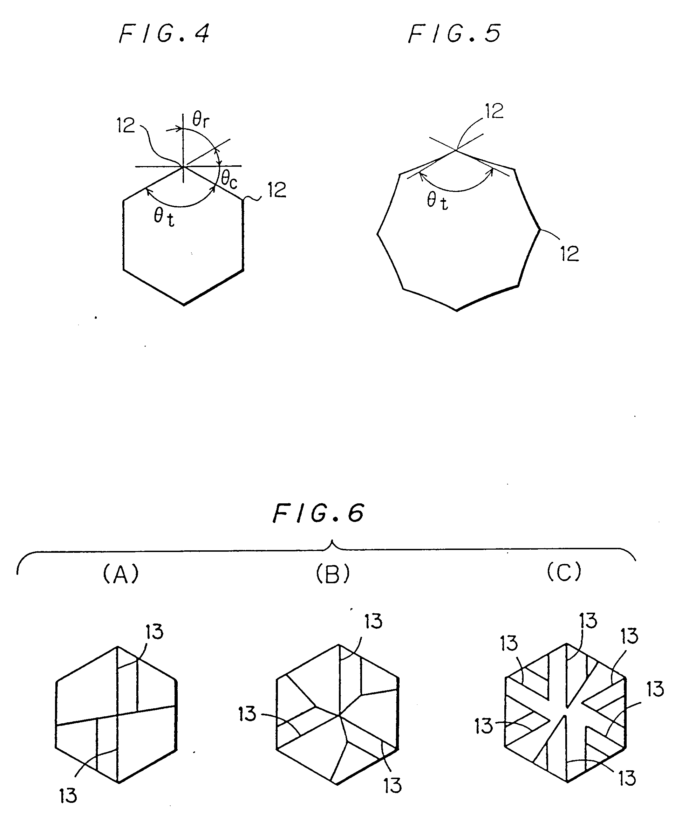

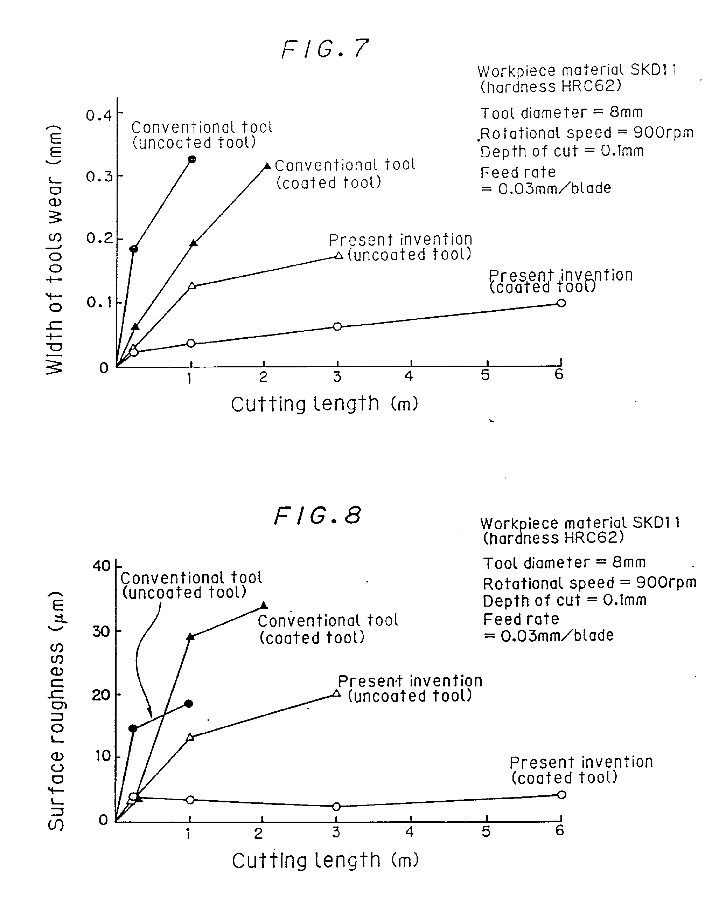

Figs. 1 (A), 1 (B) and 1 (C) illustrate a first example of the present invention; Fig. 1 (A) is a front view of the first example; Fig. 1 (B) is a side view of the first example; Fig. 1 (C) is a top view of the first example; Fig. 2, (A) and 2 (B) illustrate an example of a conventional end mill; Fig. 2 (A) is a front view of the example of the conventional end mill; Fig. 2 (B) is a side view of the example of the conventional end mill; Figs. 3 (A) and 3 (B) illustrate a second example of the present invention; Fig. 3 (A) is a front view of the second example; Fig. 3 (B) is a side view of the second example; Fig. 4 illustrates the rake and relief angles of the peripheral cutting edges for the regular hexagonal section perpendicular to the axis of the end mill of the present invention; Fig. 5 illustrates the concaved sides of the polygonal section of the end mill of the present invention. Fig. 6 illustrates the arrangements of the bottom edges for the regular hexagonal section of a third example of the present invention, and Figs. 7 and 8 compare the performance of the end mills of the present and that of conventional end mills.

The purposes of the present invention are the same as those of the Japanese Utility Model Application No. 9852/1989 that was applied for by the same applicant of the present invention. The present invention is intended to upgrade the major features of the Application. Fig. 1 illustrates an end mill which is rotated clockwise as obviously indicated by the direction of the bottom edge 13. The section perpendicular to the axis of the end mill is hexagonal and the cutting edge of the end mill has a right-hand helix angle ϑa. In the case of the hexagonal section, six peripheral cutting edges are formed. The cutting edge has a rake angle ϑr of -60° and a relief angle ϑc of 30° in the section perpendicular to the axis as shown in the sectional view of Fig. 4. The cutting angle ϑt of the end mill is thus 120°. With these specifications, the end mill of the present invention is capable of having the cutting strength and rigidity suited for cutting of the hard work as high as HRC60. The end mill of the present invention can have more cutting edges than the conventional end mills even when the diameter of the end mill is small. Chip pockets are indispensable to end mills. The chip pockets of the end mill of the present invention are formed at the areas enclosed by the cylinder that circumscribes the edges of the polygonal section, i.e., the cutting edges 10 and the surfaces formed by the sides of the polygonal section. It is known that these chip pocket areas are enough to treat chips, because the amount of chips is limited in the case of finish cutting. The cutting edge 10 has the right-hand helix angle ϑa to relieve the impact caused at the time of cutting and to smoothly cut the hard work, thereby ensuring finish cutting of the hard work, even though the cutting angle ϑt of the end mill is large.

It is desirable to increase the number of cutting edges, that is, to use polygons with more vertexes when cutting harder work. Particularly when the diameter of the end mill is larger, the number of the cutting edges should be increased. If the polygon has eight or more vertexes, however, the vertex angle of the polygon is too large to properly function as the cutting angle ϑt. To solve this problem, each side of the polygon is concaved to obtain the desired cutting, angle ranging between 90° and 130° as illustrated in Fig. 5.

A plurality of the bottom edges 13, which are indispensable to end mills, are provided for the end mill of the present invention from the vertexes of the polygon to the center of the axis. In addition, the number of the bottom edges is set as a divider of the number of the angles of the polygon or the quotient obtained by dividing the number of the angles of the polygon by the number of the bottom edges is an integer. This arrangement makes the bottom edges well-balanced and stable during cutting. When the polygon is a square, for example, the number of the bottom edges is two or four. When the polygon is a hexagon, the number of the bottom edges is two, three or six. Fig. 6 illustrates the arrangements of the bottom edges 13 (indicated by black solid areas for easy visual recognition) selectable when the polygon is a hexagon.

The end mill of the present invention is made of cemented carbide coated with hard substance. This hardening of the end mill is combined with the above-mentioned shapes of the cutting edges to make the cutting of the hard work possible. The large negative rake angle of the end mill of the present invention prevents the coating of the end mill from being peeled during cutting. (Peeling is the most undesirable phenomenon of the coating.)

### EXAMPLES

Fig. 1 illustrates a first example of the end mill of the present invention which rotates clockwise. On the periphery of the shank 11 of the end mill, the edge formed along the axis of the end mill at each vertex 12 of the regular hexagonal section perpendicular to the axis forms a cutting edge 10 with a right-helix angle of 30°. The two bottom edges 13 disposed on the end surface of the shank 11 has a rake angle αr of -20° in the radial direction and a rake angle αa of -5° in the axial direction. The end mill is 8 mm in diameter and 60 mm in overall length. The length of its cutting section is 20 mm. The end mill is made of cemented carbide and coated with TiN. By finish cutting the cold metal mold made of alloy steel heat-treated to have a hardness of HRC62, the finish cutting performance of the uncoated and coated end mills of this invention was compared with that of uncoated and coated conventional end mills made of cemented carbide as described below. The dimensions of these conventional end mills, illustrated in Fig. 2, are the same as those of the end mills of the present invention. The depth of cut was 0.1 mm in the radial direction and dry cutting was performed. Figs. 7 and 8 illustrate the results of the comparison. According to Figs. 7 and 8, the durability of the end mills of the present invention is three or more times that of the conventional end mills. It is obvious that the surface roughness obtained by the end mills of the present invention is superior to that obtained by the conventional end mills. The uncoated conventional end mill was significantly chipped when the cutting length of the end mill reached only 0.25 m. Cutting had to be stopped when the cutting length reached 1 m. The coated conventional end mill was able to withstand a cutting length of only 2 m. The coated end mill of the present invention was not chipped and was able to be used further when the cutting length reached 6 m, even though the feed rate of the end mill was three times that of the conventional end mills. The surface roughness obtained by using the uncoated conventional end mill made of cemented carbide was about 20 µm Rmax because the end mill was chipped. The surface roughness obtained by using the coated conventional end mill made of cemented carbide was about 30 µm Rmax or more because the coating was peeled. The surface roughness obtained by using the coated cemented carbide end mill of the present invention was as low as about 5 µm Rmax. This indicates that the edge shape of the end mill of the present invention is well matched with its coating.

The number of the angles of the polygon and the number of the bottom edges can be determined properly by considering the hardness of the work, tool material and tool diameter. The helix angle of the cutting edges and the rake angle of the bottom edges can also be selected within the predetermined ranges. Fig. 3 illustrates an example of the end mill of the present invention with a square section. The number of the bottom edges of this example is four. Like reference characters designate the corresponding sections in the accompanying drawings. A tapered slot end mill having a polygonal shape is an example of an end mill similar to this invention. The polygonal shape is utilized to increase the rigidity of the end mill that has a small diameter and a long cutting section. Unlike the end mill of the present invention, the tapered slot end mill has a tapered cutting section and is used to cut only deep slots.

As described above, the end mill of the present invention has helix cutting edges of a polygonal section perpendicular to its axis. This increases the number of the cutting edges, the strength of the cutting edges and the rigidity of the end mill, thus significantly preventing the cutting edges from being worn and chipped. The helix angle formed in the rotational direction of the end mill relieves the impact generated during cutting. As a result, the end mill of the present invention is able to cut the face or side of hard work at a feed rate several times higher than that of the conventional end mills. Moreover, the end mill of the present invention assures superior surface roughness of finished work. The cutting method using the end mill of the present invention made of conventional tool materials, i.e., cemented carbide and coated hard substance, has thus become comparable well with grinding and electrical discharge machining methods which are generally used to cut hard work.

Even when the polygon has many angles, the above-mentioned effects can be obtained by concaving each side of the polygon.

## Claims

1. An end mill for finishing the side or face of hard work comprising a shank (11) and a plurality of helical cutting edges (10) on the periphery of the end mill circumscribed by an imaginery cylinder with the helix direction of the cutting edges about the longitudinal axis of the end mill being in the same direction as the cutting rotational direction of the end mill characterised in that the cross-section of the end mill perpendicular to its longitudinal axis comprises a regular polygon having at least four sides with adjacent sides of the polygon forming symmetrical vertices that constitute the cutting edges.

2. An end mill according to claim 1 further characterised in that the polygon comprises at least eight sides and each side is symmetrically concave to reduce the cutting angle to a maximum of 130°.

3. An end mill according to claim 1 or claim 2 further characterised in that the cutting edge defined by the polygon sides is in the range of 90° to 130°.

4. An end mill according to claim 1 in which the polygon is a regular hexagon having six cutting edges and two bottom cutting edges disposed at the end of the mill, the cutting edge having a right helix angle of 30° and the bottom cutting edge having a rake angle of -20° in the radial direction and -5° in the axial direction.

5. An end mill according to any of claims 1 to 3 in which the end of the mill is provided with a plurality of bottom cutting edges and the ratio of polygonal sides to bottom cutting edges is unity or an integral multiple.

6. An end mill according to claim 5 in which the bottom cutting edges (13) have a negative rake angle.

7. An end mill according to any preceding claim in which the cutting edge has a negative rake angle.

8. An end mill according to any preceding claim in which the end mill is made of cemented carbide and coated with a hard substance.

## Patentansprüche

1. Schaftfräser zur Endbearbeitung der Seite oder Stirnfläche eines harten Werkstückes, umfassend einen Schaft (11) und mehrere in Schraubenlinie verlaufende Schneidkanten (10) am Umfang des Schaftfräsers, der von einem imaginären Zylinder begrenzt ist, wobei die Richtung der Schraubenlinie der Schneidkanten um die Längsachse des Schaftfräsers in derselben Richtung wie die Schneiddrehrichtung des Schaftfräsers verläuft, dadurch gekennzeichnet, daß der Querschnitt des Schaftfräsers senkrecht zu seiner Längsachse ein regelmäßiges Vieleck umfaßt, bei dem wenigstens vier Seiten mit den benachbarten Seiten des Vielecks symmetrische Scheitelpunkte bilden, die die Schneidkanten bilden.

2. Schaftfräser nach Anspruch 1, ferner dadurch gekennzeichnet, daß das Vieleck wenigstens acht Seiten umfaßt und jede Seite symmetrisch konkav ist, so daß der Schneidwinkel auf maximal 130° verringert ist.

3. Schaftfräser nach Anspruch 1 oder Anspruch 2, ferner dadurch gekennzeichnet, daß die von den Seiten des Vielecks bestimmte Schneidkante im Bereich von 90° bis 130° liegt.

4. Schaftfräser nach Anspruch 1, wobei das Vieleck ein regelmäßiges Sechseck mit sechs Schneidkanten und zwei am Ende des Fräsers angeordneten unteren Schneidkanten ist und wobei die Schneidkanten einen Rechtsschraubenlinienwinkel von 30° und die unteren Schneidkanten einen Spanwinkel von 20° in radialer Richtung und -5° in axialer Richtung aufweisen.

5. Schaftfräser nach einem der Ansprüche 1 bis 3, wobei das Ende des Fräsers mit mehreren unteren Schneidkanten versehen ist und das Verhältnis der Vieleckseiten zu den unteren Schneidkanten eins oder ein ganzzahliges Vielfaches ist.

6. Schaftfräser nach Anspruch 5, wobei die unteren Schneidkanten (13) einen negativen Spanwinkel aufweisen.

7. Schaftfräser nach einem der vorstehenden Ansprüche, wobei die Schneidkante einen negativen Spanwinkel aufweist.

8. Schaftfräser nach einem der vorstehenden Ansprüche, wobei der Schaftfräser aus Hartmetall hergestellt und mit einem harten Stoff beschichtet ist.

## Revendications

1. Fraise en bout pour la finition du côté de la face d'une pièce dure, comprenant une queue (11) et une série d'arêtes tranchantes hélicoïdales (10) sur la périphérie de la fraise en bout, circonscrites par un cylindre imaginaire, le sens de l'hélice des arêtes tranchantes autour de l'axe longitudinal de la fraise en bout étant de même sens que le sens de rotation de coupe de la fraise, caractérisé en ce que la section de la fraise en bout, perpendiculairement à son axe longitudinal, constitue un polygone régulier ayant au moins quatre côtés, les côtés adjacents du polygone formant des sommets symétriques qui constituent les arêtes tranchantes.

2. Fraise en bout selon la revendication 1, caractérisé en outre en ce que le polygone comprend au moins huit côtés et que chaque côté est concave avec une forme symétrique pour réduire l'angle de tranchant à un maximum de 130°.

3. Fraise en bout selon la revendication 1 ou la revendication 2, caractérisé en outre en ce que l'arête tranchante définie par le côté du polygone est de l'ordre de 90° à 130°.

4. Fraise en bout selon la revendication 1, dans laquelle le polygone est un hexagone régulier ayant six arêtes tranchantes et deux arêtes tranchantes inférieures disposées à l'extrémité de la fraise, l'arête tranchante ayant un angle d'hélice à droite de 30° et l'arête tranchante inférieure ayant un angle d'attaque de -20° dans la direction radiale est de -5° dans la direction axiale.

5. Fraise en bout selon une quelconque des revendications 1 à 3, dans laquelle l'extrémité de la fraise est munie d'une pluralité d'arêtes tranchantes inférieures et le rapport des côtés du polygone aux arêtes tranchantes inférieures est égal à l'unité ou à un multiple entier.

6. Fraise en bout selon la revendication 5, dans laquelle les arêtes tranchantes inférieures (13) ont un angle d'attaque négatif.

7. Fraise en bout selon une quelconque des revendications précédentes, dans laquelle l'arête tranchante a un angle d'attaque négatif.

8. Fraise en bout selon une quelconque des revendications précédentes, dans laquelle la fraise en bout est faite de carbure cémenté et revêtue d'une substance dure.
